# EUROPEAN PATENT SPECIFICATION

(11) **EP 4 518 544 B1**
(45) Date of publication and mention of the grant of the patent: **07.10.2026**
(21) Application number: 22938886.3
(22) Date of filing: 25.04.2022
(51) Int. Cl.: H04W 74/0833, H04L 1/08, H04L 1/1829, H04L 5/00, H04B 7/10

(54) **CHANNEL TRANSMISSION METHOD AND APPARATUS, AND STORAGE MEDIUM**
KANALÜBERTRAGUNGSVERFAHREN UND -VORRICHTUNG SOWIE SPEICHERMEDIUM
PROCÉDÉ ET APPAREIL DE TRANSMISSION DE CANAL, ET SUPPORT DE STOCKAGE

(43) Date of publication of application: 05.03.2025
(73) Proprietor: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2022/089096
(87) International publication number: WO 2023/206029

(56) References cited:
- WO-A1-2021/058576
- WO-A2-2021/253018
- CN-A- 113 518 472
- CN-A- 114 175 804
- US-A1- 2020 395 997
- US-A1- 2021 266 979
- ZTE: "Discussion on additional enhancement for NR-NTN", vol. RAN WG1, no. e-Meeting; 20210125 - 20210205, 18 January 2021 (2021-01-18), XP051970310, Retrieved from the Internet <URL:https://ftp.3gpp.org/tsg_ran/WG1_RL1/TSGR1_104-e/Docs/R1-2100247.zip R1-2100247 Discussion on additional enhancement for NR-NTN.doc> [retrieved on 20210118]
- LG ELECTRONICS: "Discussions on other aspects of NTN", 3GPP TSG RAN WG1 #103-E R1-2008413, 24 October 2020 (2020-10-24), XP051946660

## Description

### TECHNICAL FIELD

The present invention relates to the field of communications, and in particular, to channel transmission methods and channel transmission apparatuses.

### BACKGROUND

In a non-terrestrial network (NTN), antennas on satellites are mostly circularly polarized, while terminals on the ground may use circularly polarized antennas or linearly polarized antennas depending on their categories. A polarization loss occurs when there is a polarization mismatch between a base station antenna and a terminal antenna. The polarization loss may be compensated for by multiple repeated transmissions.

When repeatedly transmitting a physical random access channel (PRACH), for a ground terminal repetition scheme, which refers to re-transmitting a preamble if no feedback (which may be message 2 or message 4 in a random access procedure) is received from the base station within a period, it will reduce the efficiency due to a long round-trip time (RTT) in the NTN.

If a repetition scheme for a narrow band Internet of Things (NB-IoT) physical random access channel (NPRACH) is reused, multiple repetitions of the preamble are not actually required by the covered terminals in the NTN for a case of the same polarization, for example a case where the polarization of the satellite is identical to that of the terminal. Therefore, it will lead to a resource waste and a terminal power consumption if a repetition number is configured for all the terminals.

WO2021253018A2 discloses a method for determining a line of sight (LOS) from intensity measurements.

### SUMMARY

In view of the above, examples of the present invention provide a channel transmission method and apparatus, and a storage medium. The invention is set out in the appended set of claims.

According to a first aspect of the present invention, a channel transmission method is provided. The method is applied to a terminal and comprises the features of claim 1.

Optionally, the indication information indicates one repetition number corresponding to each terminal polarization type.

Optionally, determining, based on the indication information transmitted by the base station, the target repetition number corresponding to the polarization adopted by the terminal includes:
taking, based on the indication information, a repetition number corresponding to the terminal polarization type adopted by the terminal as the target repetition number.

Optionally, determining the repetition coefficient based on the indicated uplink polarization and the polarization adopted by the terminal includes:
determining the repetition coefficient to be 1 in response to determining that the indicated uplink polarization is identical to the polarization adopted by the terminal; and
determining the repetition coefficient to be 2 in response to determining that the indicated uplink polarization is different from the polarization adopted by the terminal.

Optionally, the method further includes:
determining that an indicated uplink polarization is identical to an indicated downlink polarization in a case that the indication information indicates only the downlink polarization.

Optionally, the designated information field is an information field configured to indicate the repetition number in the DCI, or the designated information field reuses an information field corresponding to a preamble index.

Optionally, the method further includes:
receiving radio resource control (RRC) signaling transmitted by the base station, wherein the RRC signaling indicates the preamble types to which the different preambles belong.

Optionally, the indication information indicates that the target repetition number is identical to a repetition number of the PRACH by which the terminal initiates an initial random access procedure.

Optionally, transmitting, in accordance with the target repetition number, the PRACH on the one or more random access resources includes:
transmitting, in accordance with the target repetition number, a preamble for a random access procedure on one or more available random access occasions (ROs) in the one or more random access resources.

According to a second aspect the present invention, a channel transmission method is provided. The method is applied to a base station and comprises the features of claim 7.

Optionally, the indication information indicates one repetition number corresponding to each terminal polarization type.

Optionally, the method further includes:
determining, from one or more candidate repetition numbers corresponding to each terminal polarization type agreed upon by a protocol, the one repetition number corresponding to each terminal polarization type to be transmitted to the terminal.

Optionally, the designated information field is an information field configured to indicate the repetition number in the DCI, or the designated information field reuses an information field corresponding to a preamble index.

Optionally, the method further includes:
transmitting RRC signaling to the terminal, wherein the RRC signaling indicates preamble types to which different preambles belong.

Optionally, the indication information indicates that the target repetition number is identical to a repetition number of the PRACH by which the terminal initiates an initial random access procedure.

Optionally, receiving, on the one or more random access resources, the PRACH that is transmitted by the terminal in accordance with the target repetition number includes:
receiving, on one or more available ROs in the one or more random access resources, a preamble for a random access procedure that is transmitted by the terminal in accordance with the target repetition number.

According to a third aspect of the invention, a channel transmission apparatus comprising the features of claim 12 is provided. The apparatus is applied to a terminal and includes:
a determining module, configured to determine, based on indication information transmitted by a base station, a target repetition number corresponding to a polarization adopted by the terminal; and
a first transmitting module, configured to transmit, in accordance with the target repetition number, a PRACH on one or more random access resources.

According to a fourth aspect of the invention, a channel transmission apparatus is provided comprising the features of claim 13. The apparatus is applied to a base station and includes:
a second transmitting module, configured to transmit indication information to a terminal, wherein the indication information is used by the terminal to determine a target repetition number corresponding to a polarization adopted by the terminal; and
a receiving module, configured to receive, on one or more random access resources, a PRACH that is transmitted by the terminal in accordance with the target repetition number.

Also disclosed is a computer-readable storage medium storing a computer program. The computer program is configured to perform any one of the described channel transmission methods at the terminal side.

Also disclosed is a computer-readable storage medium storing a computer program. The computer program is configured to perform any one of the described channel transmission methods at the base station side.

Also disclosed is a channel transmission apparatus, including:
one or more processors; and
one or more memories for storing instructions executable by the one or more processors.

The one or more processors are configured to perform any one of the described channel transmission methods at the terminal side.

Also disclosed is a channel transmission apparatus, including:
one or more processors; and
one or more memories for storing instructions executable by the one or more processors.

The one or more processors are configured to perform any one of the described channel transmission methods at the base station side.

The technical solutions provided by the examples of the present invention may obtain the following beneficial effects.

In the examples of the present invention, the terminal may determine the target repetition number corresponding to the polarization adopted by the terminal based on the indication information transmitted by the base station, and transmit the PRACH on the one or more random access resources in accordance with the target repetition number. By means of the present invention, the corresponding target repetition number of the PRACH can be determined for the terminal with a distinct polarization, thereby effectively compensating the terminal that has a polarization loss for the polarization loss, and effectively reducing a terminal power loss for the terminal that has no polarization loss, which has a high availability.

It is to be understood that the foregoing general description and the following detailed description are exemplary and explanatory only and are not restrictive of the present invention.

### BRIEF DESCRIPTION OF THE DRAWINGS

The accompanying drawings, which are incorporated in and constitute a part of the description, illustrate examples consistent with the present invention and, together with the description, serve to explain the principles of the invention.
FIG. 1 illustrates a schematic flowchart of a channel transmission method according to an example.
FIG. 2 illustrates a schematic flowchart of another channel transmission method according to an example.
FIG. 3A illustrates a schematic flowchart of another channel transmission method according to an example.
FIG. 3B illustrates a schematic flowchart of another channel transmission method according to an example.
FIG. 4 illustrates a schematic flowchart of another channel transmission method according to an example.
FIG. 5A illustrates a schematic flowchart of another channel transmission method according to an example.
FIG. 5B illustrates a schematic flowchart of another channel transmission method according to an example.
FIG. 5C illustrates a schematic flowchart of another channel transmission method according to an example.
FIG. 6 illustrates a schematic flowchart of another channel transmission method according to an example.
FIG. 7A illustrates a schematic diagram of transmitting a preamble in accordance with a target repetition number according to an example.
FIG. 7B illustrates a schematic diagram of transmitting a preamble in accordance with a target repetition number according to an example.
FIG. 8 illustrates a schematic flowchart of another channel transmission method according to an example.
FIG. 9 illustrates a schematic flowchart of another channel transmission method according to an example.
FIG. 10A illustrates a schematic flowchart of another channel transmission method according to an example.
FIG. 10B illustrates a schematic flowchart of another channel transmission method according to an example.
FIG. 11 illustrates a schematic flowchart of another channel transmission method according to an example.
FIG. 12A illustrates a schematic flowchart of another channel transmission method according to an example.
FIG. 12B illustrates a schematic flowchart of another channel transmission method according to an example.
FIG. 12C illustrates a schematic flowchart of another channel transmission method according to an example.
FIG. 13 illustrates a schematic flowchart of another channel transmission method according to an example.
FIG. 14 illustrates a block diagram of a channel transmission apparatus according to an example.
FIG. 15 illustrates a block diagram of another channel transmission apparatus according to an example.
FIG. 16 illustrates a schematic structural diagram of a channel transmission apparatus according to an example of the present invention.
FIG. 17 illustrates a schematic structural diagram of another channel transmission apparatus according to an example of the present invention.

### DETAILED DESCRIPTION OF THE EMBODIMENTS

Examples will be described in detail here with the illustrations thereof illustrated in the drawings. When the following descriptions involve the drawings, like numerals in different drawings refer to like or similar elements unless otherwise indicated. The implementations described in the following examples do not represent all implementations consistent with the present invention. Rather, they are merely examples of apparatuses and methods consistent with some aspects of the present invention as detailed in the appended claims.

The terms used in the present invention are for the purpose of describing particular examples only, and are not intended to limit the present invention. Terms determined by "a", "said" and "the" in their singular forms in the present invention and the appended claims are also intended to include their plural forms, unless clearly indicated otherwise in the context. It is also to be understood that the term "and/or" as used herein is and includes any or all possible combinations of at least one associated listed item.

It is to be understood that, although terms "first," "second," "third," and the like may be used in the present invention to describe various information, such information should not be limited to these terms. These terms are only used to distinguish the information of the same type with each other. For example, without departing from the scope of the present invention, first information may be referred as second information; and similarly, second information may also be referred as first information. Depending on the context, the word "if" as used herein may be interpreted as "when", "upon", or "in response to determining".

The following first introduces the channel transmission methods provided by the present invention from the terminal side.

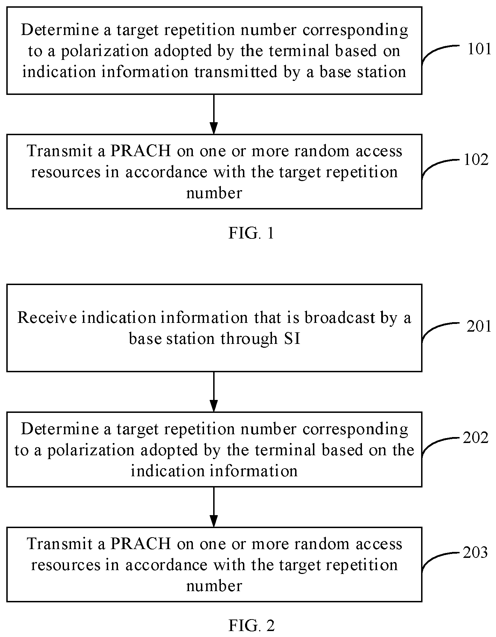

The examples of the present invention provide a channel transmission method. As illustrated in FIG. 1, it illustrates a flowchart of a channel transmission method according to an example, and may be applied to a terminal, which may be a terminal in a non-terrestrial network (NTN). The method may include the following steps.

At step 101, a target repetition number corresponding to a polarization adopted by the terminal is determined based on indication information transmitted by a base station.

At step 102, a physical random access channel (PRACH) is transmitted on one or more random access resources in accordance with the target repetition number.

In the example of the present invention, the one or more random access resources are pre-allocated to the terminal by the base station and used for the terminal to perform a random access procedure.

In the example, the corresponding target repetition number of the PRACH can be determined for the terminal with a distinct polarization, thereby effectively compensating the terminal that has a polarization loss for the polarization loss, and effectively reducing a terminal power loss for the terminal that has no polarization loss, which has a high availability.

In some optional examples, as illustrates in FIG. 2, it illustrates a flowchart of a channel transmission method according to an example. The method may be applied to a terminal, which may be a terminal in an NTN. The method may include the following steps.

At step 201, indication information that is broadcast by a base station through system information (SI) is received.

In the example of the present invention, the terminal has not accessed the base station and is to complete an initial random access procedure based on the SI.

At step 202, a target repetition number corresponding to a polarization adopted by the terminal is determined based on the indication information.

At step 203, a PRACH is transmitted on one or more random access resources in accordance with the target repetition number.

In the example, the base station may broadcast the indication information through the SI, and the terminal that is to complete the initial random access procedure may read the indication information from the SI, and may further determine the target repetition number based on the indication information, so as to transmit the PRACH in accordance with the target repetition number. Therefore, the corresponding target repetition number of the PRACH can be determined for the terminal with a distinct polarization, thereby effectively compensating the terminal that has a polarization loss for the polarization loss, and effectively reducing a terminal power loss for the terminal that has no polarization loss, which has a high availability.

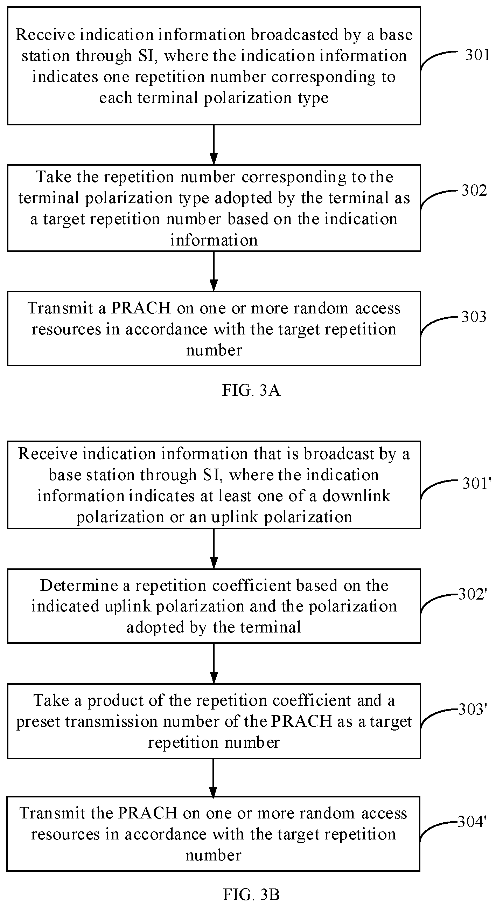

In some optional examples, as illustrates in FIG. 3A, it illustrates a flowchart of a channel transmission method according to an example. The method may be applied to a terminal, which may be a terminal in an NTN. The method may include the following steps.

At step 301, indication information broadcasted by a base station through SI is received, where the indication information indicates one repetition number corresponding to each terminal polarization type.

In the example of the present invention, the terminal has not accessed the base station and is to complete an initial random access procedure based on the SI.

In the example of the present invention, one or more candidate repetition numbers corresponding to each terminal polarization type may be agreed upon by a protocol. The terminal polarization types include, but are not limited to, a circular polarization, a linear polarization, supporting both the circular polarization and the linear polarization, etc. The candidate repetition numbers corresponding to the terminal polarization types are shown as Table 1.

**Table 1**

| Terminal polarization type | Candidate repetition number |
|---|---|
| Circular polarization | 1, 2, 3 , ...... |
| Linear polarization | 2, 4 , 6 , ...... |
| Supporting both circular polarization and linear polarization | 1 |

The circular polarization includes, but is not limited to, a right-hand circularized polarization (RHCP) and a left-hand circularized polarization (LHCP).

In the example of the present invention, the base station may determine one repetition number corresponding to each terminal polarization type according to Table 1. For example, the repetition number corresponding to the circular polarization is 1, the repetition number corresponding to the linear polarization is 2, and the repetition number corresponding to supporting both the circular polarization and the linear polarization is 1. The base station takes one repetition number corresponding to each terminal polarization type as the indication information and broadcasts it through the SI. The terminal may obtain the indication information via receiving the SI.

At step 302, the repetition number corresponding to the terminal polarization type adopted by the terminal is taken as a target repetition number based on the indication information.

In the example of the present invention, assuming that the polarization adopted by the terminal is the RHCP, the corresponding terminal polarization type is the circular polarization, and the terminal may take the repetition number corresponding to the circular polarization in the indication information, 1, as the target repetition number.

At step 303, a PRACH is transmitted on one or more random access resources in accordance with the target repetition number.

In the example, it is achieved that the terminal determines the target repetition number for transmitting the PRACH based on the indication information in the SI, and can determine the corresponding target repetition number of the PRACH for the terminal with a distinct polarization, thereby effectively compensating the terminal that has a polarization loss for the polarization loss, and effectively reducing a terminal power loss for the terminal that has no polarization loss, which has a high availability.

In some optional examples, as illustrates in FIG. 3B, it illustrates a flowchart of a channel transmission method according to an example. The method may be applied to a terminal, which may be a terminal in an NTN. The method may include the following steps.

At step 301', indication information that is broadcast by a base station through SI is received, where the indication information indicates at least one of a downlink polarization or an uplink polarization.

In the example of the present invention, the terminal has not accessed the base station and is to complete an initial random access procedure based on the SI.

In the example of the present invention, the downlink polarization refers to a polarization adopted by the base station to transmit downlink signals, while the uplink polarization refers to a polarization adopted to transmit uplink signals, which may be the polarization adopted by the terminal to transmit the uplink signals and expected by the base station.

At step 302', a repetition coefficient is determined based on the indicated uplink polarization and the polarization adopted by the terminal.

In a possible implementation, in a case that the indication information indicates at least the uplink polarization, it is determined that the terminal has no polarization loss when the uplink polarization indicated by the indication information is identical to the polarization adopted by the terminal, and the repetition coefficient may be determined to be 1, thereby avoiding a terminal power consumption and a terminal resource waste due to multiple repetitions of the PRACH.

For example, the uplink polarization is the RHCP and the polarization adopted by the terminal is also the RHCP. Thus, the repetition coefficient is determined to be 1.

In another possible implementation, in a case that the indication information indicates at least the uplink polarization, it is determined that the terminal has a polarization loss when the uplink polarization indicated by the indication information is different from the polarization adopted by the terminal, and the repetition coefficient is determined to be 2, thereby compensating for the polarization loss via multiple repetitions of the PRACH.

For example, the uplink polarization is the RHCP and the polarization adopted by the terminal is the linear polarization. Thus, the repetition coefficient is determined to be 2.

In another possible implementation, in a case that the indication information indicates only the downlink polarization, that is, only the downlink polarization is indicated by the indication information, the terminal may determine that the uplink polarization indicated by the indication information is identical to the downlink polarization indicated by the indication information. Furthermore, the terminal may determine the repetition coefficient in the above way based on whether the uplink polarization indicated by the indication information is identical to the polarization of the terminal.

For example, the indication information indicates that the downlink polarization is the LHCP, and then the terminal considers that the uplink polarization indicated by the indication information is also the LHCP.

At step 303', a product of the repetition coefficient and a preset transmission number of the PRACH is taken as a target repetition number.

In the example of the present invention, the preset transmission number of the PRACH may be agreed upon by a protocol or configured by the base station. Assuming that the preset transmission number of the PRACH is N, the terminal may take the product of the repetition coefficient and N as the target repetition number.

For example, the repetition coefficient is 2 and thus the target repetition number is 2N, and the repetition coefficient is 1 and thus the target repetition number is N.

In a possible implementation, the terminal may consider N to be 1 by default if the preset transmission number is not configured by the base station.

At step 304', the PRACH is transmitted on one or more random access resources in accordance with the target repetition number.

In the example, it is achieved that the terminal determines the target repetition number for transmitting the PRACH based on the indication information in the SI, thereby effectively compensating the terminal that has a polarization loss for the polarization loss, and effectively reducing a terminal power consumption and avoiding a terminal resource waste for the terminal that has no polarization loss, which has a high availability.

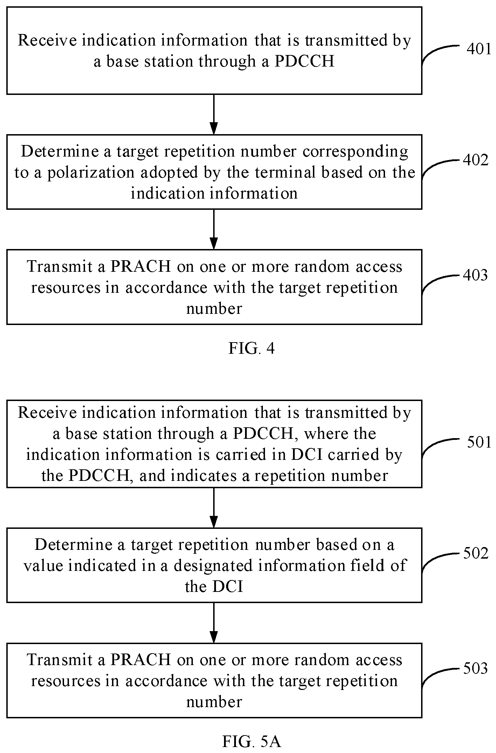

In some optional examples, as illustrates in FIG. 4, it illustrates a flowchart of a channel transmission method according to an example. The method may be applied to a terminal, which may be a terminal in an NTN. The method may include the following steps.

At step 401, indication information that is transmitted by a base station through a physical downlink control channel (PDCCH) is received.

In the example of the present invention, a random access procedure may also be triggered based on a PDCCH order. In this case, the terminal may receive the indication information transmitted by the base station through the PDCCH.

At step 402, a target repetition number corresponding to a polarization adopted by the terminal is determined based on the indication information.

At step 403, a PRACH is transmitted on one or more random access resources in accordance with the target repetition number.

In the example, it is achieved that the terminal determines the target repetition number for transmitting the PRACH based on the indication information in the PDCCH, thereby effectively compensating the terminal that has a polarization loss for the polarization loss, and effectively reducing a terminal power consumption and avoiding a terminal resource waste for the terminal that has no polarization loss, which has a high availability.

In some optional examples, as illustrates in FIG. 5A, it illustrates a flowchart of a channel transmission method according to an example. The method may be applied to a terminal, which may be a terminal in an NTN. The method may include the following steps.

At step 501, indication information that is transmitted by a base station through a PDCCH is received, where the indication information is carried in downlink control information (DCI) carried by the PDCCH, and indicates a repetition number.

At step 502, a target repetition number is determined based on a value indicated in a designated information field of the DCI.

In a possible implementation, the designated information field may be an information field newly added in the DCI, which is specifically configured to indicate the repetition number.

In another possible implementation, the designated information field may reuse an existing information field of the DCI. Optionally, an information field corresponding to a preamble index may be reused.

The above are only the examples for description. In practical applications, the designated information field may reuse another information field of the DCI, which is not limited in the present invention.

In the example of the present invention, the base station indicates the repetition number through the DCI's display, and the terminal may determine the value indicated by the designated information field and directly take the value as the target repetition number.

At step 503, a PRACH is transmitted on one or more random access resources in accordance with the target repetition number.

In the example, it is achieved that the terminal determines the target repetition number for transmitting the PRACH based on the indication information carried in the DCI of the PDCCH, thereby effectively compensating the terminal that has a polarization loss for the polarization loss, and effectively reducing a terminal power consumption and avoiding a terminal resource waste for the terminal that has no polarization loss, which has a high availability.

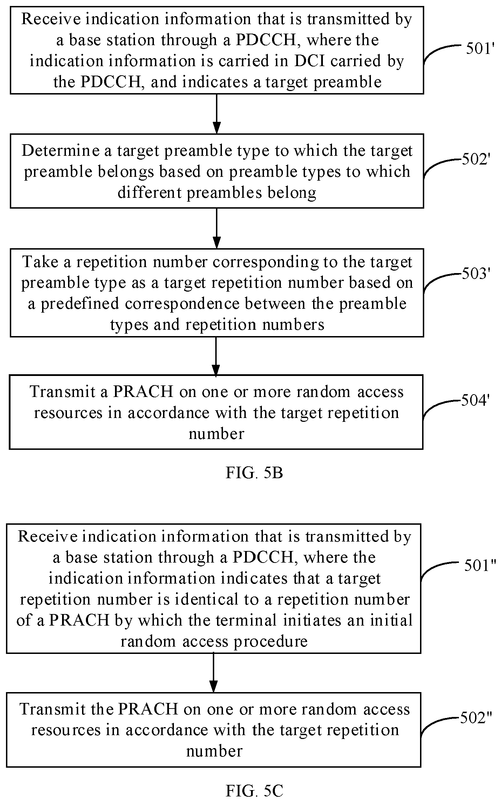

In some optional examples, as illustrates in FIG. 5B, it illustrates a flowchart of a channel transmission method according to an example. The method may be applied to a terminal, which may be a terminal in an NTN. The method may include the following steps.

At step 501', indication information that is transmitted by a base station through a PDCCH is received, where the indication information is carried in DCI carried by the PDCCH, and indicates a target preamble.

In the example of the present invention, the DCI carries the indication information, and the indication information is the target preamble indicated by the base station to the terminal.

At step 502, a target preamble type to which the target preamble belongs is determined based on preamble types to which different preambles belong.

In a possible implementation, the terminal may determine the target preamble type to which the target preamble belongs based on the preamble types to which the different preambles belong. The base station may indicate the preamble types to which the different preambles belong through radio resource control (RRC) signaling.

For example, the base station indicates through the RRC signaling that Preamble #1 to Preamble #10 belong to a first preamble type, Preamble #1 1 to Preamble #20 belong to a second preamble type, and so on. When the target preamble carried in the DCI is Preamble#1, the target preamble type is the first preamble type.

At step 503', a repetition number corresponding to the target preamble type is taken as a target repetition number based on a predefined correspondence between the preamble types and repetition numbers.

In the example of the present invention, the correspondence between the preamble types and the repetition numbers may be predefined by a protocol. For example, the repetition number corresponding to the first preamble type is 1, the repetition number corresponding to the second preamble type is 2, and so on. Assuming that the target preamble type is the first preamble type, the target repetition number is 1.

That is, the base station may implicitly indicate the repetition number through the DCI, and the terminal determines the target repetition number in the above way.

At step 504', a PRACH is transmitted on one or more random access resources in accordance with the target repetition number.

In the example, it is achieved that the terminal determines the target repetition number for transmitting the PRACH based on the indication information carried in the DCI of the PDCCH, thereby effectively compensating the terminal that has a polarization loss for the polarization loss, and effectively reducing a terminal power consumption and avoiding a terminal resource waste for the terminal that has no polarization loss, which has a high availability.

In some optional examples, as illustrates in FIG. 5C, it illustrates a flowchart of a channel transmission method according to an example. The method may be applied to a terminal, which may be a terminal in an NTN. The method may include the following steps.

At step 501", indication information that is transmitted by a base station through a PDCCH is received, where the indication information indicates that a target repetition number is identical to a repetition number of a PRACH by which the terminal initiates an initial random access procedure.

In the example of the present invention, when the terminal initiates the initial random access procedure, the approach of determining the repetition number of the PRACH is similar to the example illustrated in FIG. 3A or FIG. 3B, which is not repeated here. The base station may directly transmit the indication information to the terminal through a PDCCH, and inform the terminal via the indication information that the target repetition number is identical to the repetition number of the PRACH by which the terminal initiates the initial random access procedure.

For example, a repetition coefficient of the PRACH during the initial random access procedure is 2, and then a target repetition coefficient is 2.

At step 502", the PRACH is transmitted on one or more random access resources in accordance with the target repetition number.

In the example, it is achieved that the terminal determines the target repetition number for transmitting the PRACH based on the indication information in the PDCCH, thereby effectively compensating the terminal that has a polarization loss for the polarization loss, and effectively reducing a terminal power consumption and avoiding a terminal resource waste for the terminal that has no polarization loss, which has a high availability.

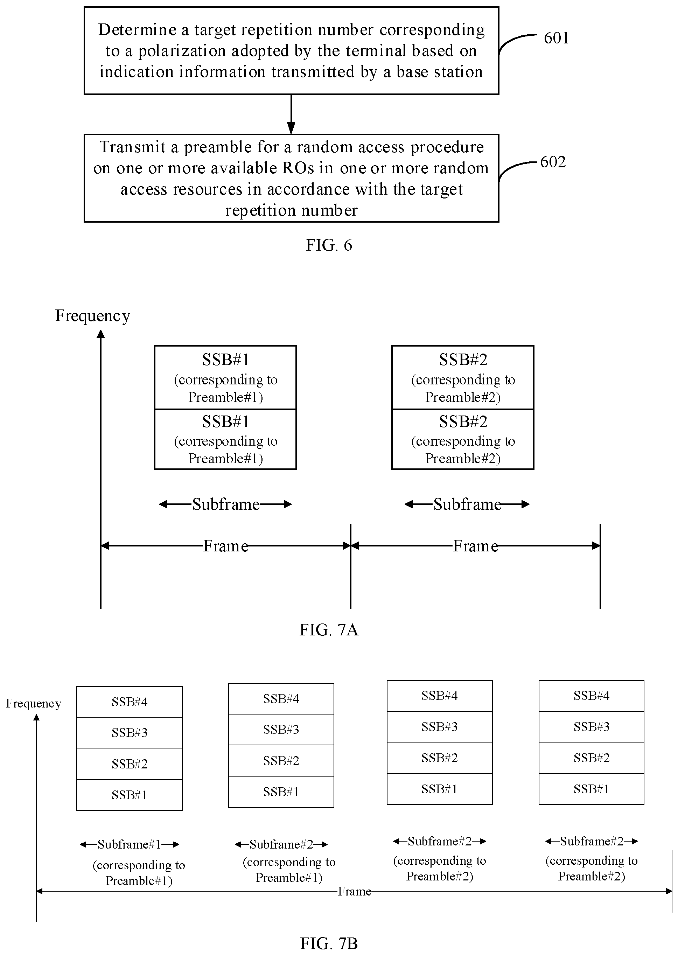

In some optional examples, as illustrates in FIG. 6, it illustrates a flowchart of a channel transmission method according to an example. The method may be applied to a terminal, which may be a terminal in an NTN. The method may include the following steps.

At step 601, a target repetition number corresponding to a polarization adopted by the terminal is determined based on indication information transmitted by a base station.

The approach for determining the target repetition number is similar to that provided in the described examples, which is not repeated here.

At step 602, a preamble for a random access procedure is transmitted on one or more available random access occasions (ROs) in one or more random access resources in accordance with the target repetition number.

In a possible implementation, the preamble may be transmitted on one or more available ROs in a frequency domain in accordance with the target repetition number.

For example, as illustrated in FIG. 7A, assuming that the target repetition number is 2, a PRACH configuration period is 1 frame of 10 milliseconds, and there is only one RO in each frame, the terminal repeatedly transmits the same preamble twice on different available ROs in a same subframe.

In another possible implementation, the preamble may be transmitted on one or more available ROs in a time domain in accordance with the target repetition number.

For example, as illustrated in FIG. 7B, assuming that the target repetition number is 2, the PRACH configuration period is 1 frame of 10 milliseconds, and there are four ROs in each frame, the terminal may transmit the same preamble on two consecutive available ROs in one frame. The two consecutive available ROs may be consecutive or nonconsecutive subframes, which are not limited in the present invention.

In the example, it is achieved that the terminal determines the target repetition number for transmitting the PRACH based on the indication information transmitted by the base station. Furthermore, the terminal transmits the preamble to the base station on the available RO(s). Therefore, it can effectively compensate the terminal having a polarization loss for the polarization loss, and effectively reduce a terminal power consumption and avoid a terminal resource waste for the terminal having no polarization loss, which has a high availability.

It is to be noted that in the examples of the present invention, the target repetition number is the number of times the terminal transmits the PRACH. When the target repetition number is 1, the terminal is to actually transmit the PRACH once. If the target repetition number is greater than 1, the terminal is to repeated transmit the PRACH for multiple times.

In the examples of the present invention, when the target repetition number is determined to be 1 in the described way, the terminal that has no polarization loss is to transmit the PRACH to the base station only once, thereby avoiding the terminal energy loss and the signaling resource waste caused by the situation where all terminals are configured to repeatedly transmit the PRACH for multiple times.

When the target repetition number is determined to be greater than 1 in the described way, the terminal that has the polarization loss is effectively compensated for the polarization loss by repeatedly transmitting the PRACH for multiple times. Next, the following introduces the channel transmission methods provided by the present invention from a base station side.

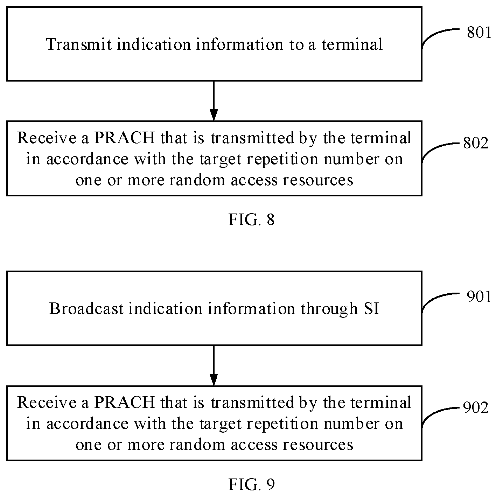

The examples of the present invention provide a channel transmission method. As illustrated in FIG. 8, it illustrates a flowchart of a channel transmission method according to an example, and may be applied to a base station, which may be a base station in an NTN. The method may include the following steps.

At step 801, indication information is transmitted to a terminal.

In the example of the present invention, the indication information is used by the terminal to determine a target repetition number corresponding to a polarization adopted by the terminal.

At step 802, a PRACH that is transmitted by the terminal in accordance with the target repetition number is received on one or more random access resources.

In the example, the base station may transmit the indication information to the terminal, so that the terminal determines the target repetition number corresponding to the polarization adopted by itself. And the base station receives the PRACH transmitted by the terminal in accordance with the target repetition number on the one or more random access resources. By means of the present invention, the corresponding target repetition number of the PRACH can be determined for the terminal with a distinct polarization, thereby effectively compensating the terminal that has a polarization loss for the polarization loss, and effectively reducing a terminal power loss for the terminal that has no polarization loss, which has a high availability.

In some optional examples, as illustrates in FIG. 9, it illustrates a flowchart of a channel transmission method according to an example. The method may be applied to a base station, which may be a base station in an NTN. The method may include the following steps.

At step 901, indication information is broadcast through SI.

In the example of the present invention, the indication information is used by the terminal to determine a target repetition number corresponding to a polarization adopted by the terminal.

At step 902, a PRACH that is transmitted by the terminal in accordance with the target repetition number is received on one or more random access resources.

In the example of the present invention, the terminal has not accessed the base station and is to complete an initial random access procedure based on the SI.

In the example, the base station may broadcast the indication information through the SI, so that the terminal may determine the target repetition number based on the indication information, and then transmit the PRACH in accordance with the target repetition number. Therefore, the corresponding target repetition number of the PRACH may be determined for the terminal with a distinct polarization, thereby it is achieved that the terminal having a polarization loss is effectively compensated for the polarization loss, and a terminal power loss is effectively reduced for the terminal having no polarization loss, which has a high availability.

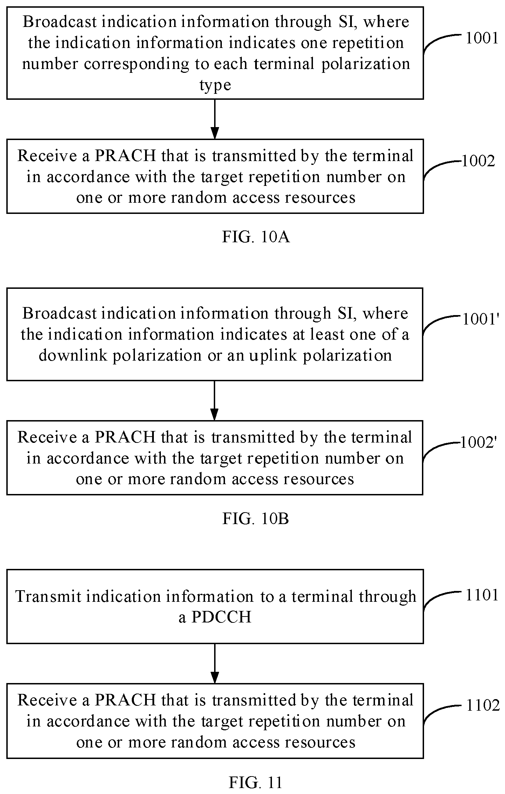

In some optional examples, as illustrates in FIG. 10A, it illustrates a flowchart of a channel transmission method according to an example. The method may be applied to a base station, which may be a base station in an NTN. The method may include the following steps.

At step 1001, indication information is broadcast through SI, where the indication information indicates one repetition number corresponding to each terminal polarization type.

In the example of the present invention, one or more candidate repetition numbers corresponding to each terminal polarization type may be agreed upon by a protocol in advance, for example, as shown in Table 1. Furthermore, the base station may determine one repetition number corresponding to each terminal polarization type, take the one repetition number corresponding to each terminal polarization type as the indication information, and broadcast it through the SI.

At step 1002, a PRACH that is transmitted by the terminal in accordance with the target repetition number is received on one or more random access resources.

In the example of the present invention, the terminal has not accessed the base station and is to complete an initial random access procedure based on the SI. The approach for the terminal to determine the target repetition number is similar to the approach illustrated in FIG. 3A, which is not repeated here.

In the example, the indication information may be transmitted to the terminal through the SI, and indicate one repetition number corresponding to each terminal polarization type, so that the terminal can determine the corresponding target repetition number of the PRACH based on the indication information, thereby effectively compensating the terminal that has a polarization loss for the polarization loss, and effectively reducing a terminal power loss for the terminal that has no polarization loss, which has a high availability.

In some optional examples, as illustrates in FIG. 10B, it illustrates a flowchart of a channel transmission method according to an example. The method may be applied to a base station, which may be a base station in an NTN. The method may include the following steps.

At step 1001', indication information is broadcast through SI, where the indication information indicates at least one of a downlink polarization or an uplink polarization.

In the example of the present invention, the downlink polarization refers to the polarization adopted by the base station to transmit downlink signals, while the uplink polarization refers to the polarization adopted to transmit uplink signals, which may be the polarization adopted by the terminal to transmit the uplink signals and expected by the base station.

At step 1002', a PRACH that is transmitted by the terminal in accordance with the target repetition number is received on one or more random access resources.

In the example of the present invention, the terminal has not accessed the base station and is to complete an initial random access procedure based on the SI. The approach for the terminal to determine the target repetition number is similar to the approach illustrated in FIG. 3B, which is not repeated here.

In the example, the indication information may be transmitted to the terminal through the SI, and indicate at least one of the uplink polarization or the downlink polarization, so that the terminal can determine the corresponding target repetition number of the PRACH based on the indication information, thereby effectively compensating the terminal that has a polarization loss for the polarization loss, and effectively reducing a terminal power loss for the terminal that has no polarization loss, which has a high availability.

In some optional examples, as illustrates in FIG. 11, it illustrates a flowchart of a channel transmission method according to an example. The method may be applied to a base station, which may be a base station in an NTN. The method may include the following steps.

At step 1101, indication information is transmitted to a terminal through a PDCCH.

In the example of the present invention, the indication information is used by the terminal to determine a target repetition number corresponding to a polarization adopted by the terminal.

At step 1102, a PRACH that is transmitted by the terminal in accordance with the target repetition number is received on one or more random access resources.

In the example, during a random access procedure triggered based on a PDCCH order, the indication information may be transmitted to the terminal through the PDCCH, so that the terminal can determine the corresponding target repetition number of the PRACH based on the indication information, thereby effectively compensating the terminal that has a polarization loss for the polarization loss, and effectively reducing a terminal power loss for the terminal that has no polarization loss, which has a high availability.

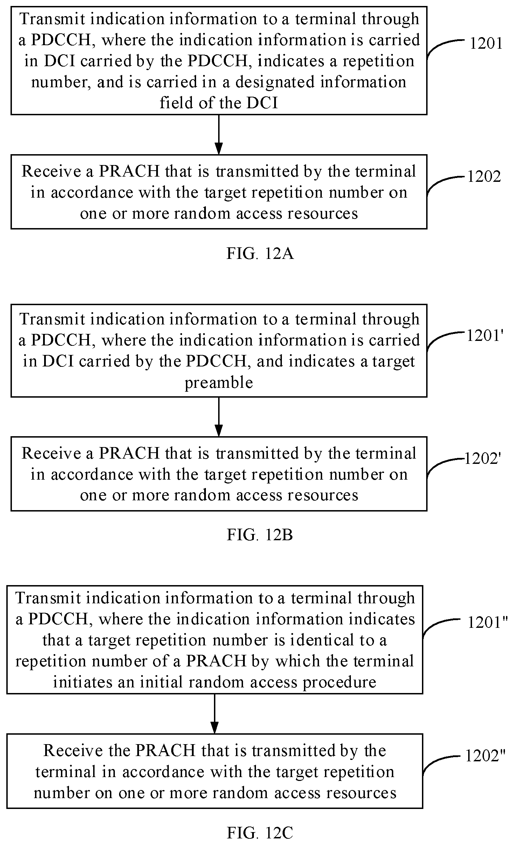

In some optional examples, as illustrates in FIG. 12A, it illustrates a flowchart of a channel transmission method according to an example. The method may be applied to a base station, which may be a base station in an NTN. The method may include the following steps.

At step 1201, indication information is transmitted to a terminal through a PDCCH, where the indication information is carried in DCI carried by the PDCCH, indicates a repetition number, and is carried in a designated information field of the DCI.

In a possible implementation, the designated information field may be an information field newly added in the DCI, which is specifically configured to indicate the repetition number.

In another possible implementation, the designated information field may reuse an existing information field of the DCI. Optionally, an information field corresponding to a preamble index may be reused.

At step 1202, a PRACH that is transmitted by the terminal in accordance with the target repetition number is received on one or more random access resources.

The approach for the terminal to determine the target repetition number is similar to the approach illustrated in FIG. 5A, which is not repeated here.

In the example, the base station may enable the terminal to determine the target repetition number by means of explicit DCI indication, thereby effectively compensating the terminal that has a polarization loss for the polarization loss, and effectively reducing a terminal power loss for the terminal that has no polarization loss, which has a high availability.

In some optional examples, as illustrates in FIG. 12B, it illustrates a flowchart of a channel transmission method according to an example. The method may be applied to a base station, which may be a base station in an NTN. The method may include the following steps.

At step 1201', indication information is transmitted to a terminal through a PDCCH, where the indication information is carried in DCI carried by the PDCCH, and indicates a target preamble.

At step 1202', a PRACH that is transmitted by the terminal in accordance with a target repetition number is received on one or more random access resources.

In a possible implementation, the base station may also transmit RRC signaling to the terminal, where the RRC signaling indicate preamble types to which different preambles belong. The approach that the terminal determines the target repetition number based on the RRC signaling and the target preamble in the DCI is similar to the approach illustrated in FIG. 5B, which is not repeated here.

In the example, the base station may enable the terminal to determine the target repetition number by means of implicit DCI indication, thereby effectively compensating the terminal that has a polarization loss for the polarization loss, and effectively reducing a terminal power loss for the terminal that has no polarization loss, which has a high availability. In some optional examples, as illustrates in FIG. 12C, it illustrates a flowchart of a channel transmission method according to an example. The method may be applied to a base station, which may be a base station in an NTN. The method may include the following steps.

At step 1201", indication information is transmitted to a terminal through a PDCCH, where the indication information indicates that a target repetition number is identical to a repetition number of a PRACH by which the terminal initiates an initial random access procedure.

At step 1202", the PRACH that is transmitted by the terminal in accordance with the target repetition number is received on one or more random access resources.

In the example of the present invention, the terminal may determine the repetition number of the PRACH during the initial random access procedure in the approach illustrated in FIG. 3A or FIG. 3B, and take the repetition number as the target repetition number for transmitting the PRACH during the random access procedure triggered based on a PDCCH order. The approach for determining the target repetition number in detail is similar to the approach illustrated in FIG. 5C, which is not repeated here.

In the example, based on the indication information in the PDCCH, the base station may enable the terminal to determine the target repetition number for transmitting the PRACH, thereby effectively compensating the terminal that has a polarization loss for the polarization loss, and effectively reducing a terminal power consumption and avoiding a terminal resource waste for the terminal that has no polarization loss, which has a high availability.

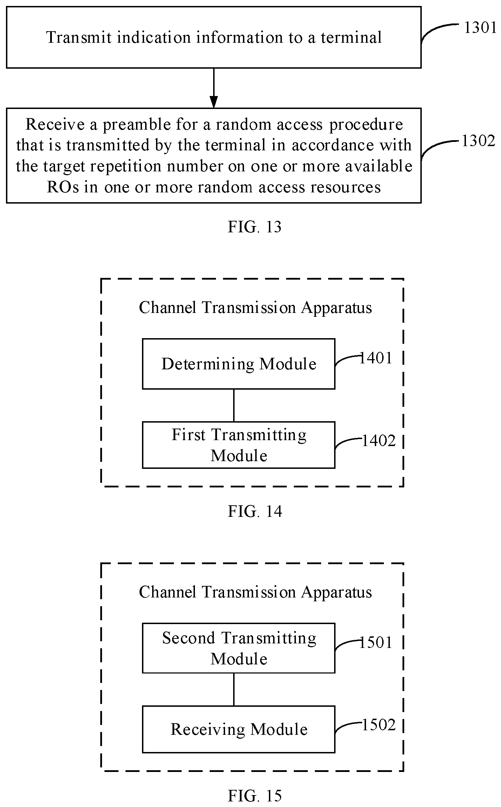

In some optional examples, as illustrates in FIG. 13, it illustrates a flowchart of a channel transmission method according to an example. The method may be applied to a base station, which may be a base station in an NTN. The method may include the following steps.

At step 1301, indication information is transmitted to a terminal.

In the example of the present invention, the indication information is used by the terminal to determine a target repetition number corresponding to a polarization adopted by the terminal.

At step 1302, a preamble for a random access procedure that is transmitted by the terminal in accordance with the target repetition number is received on one or more available ROs in one or more random access resources.

The approach for determining the one or more available ROs is similar to the approach illustrated in FIG. 7A or FIG. 7B, which is not repeated here.

In the example, the base station transmits the indication information to the terminal, and the terminal determines the target repetition number for transmitting the PRACH based on the indication information. Furthermore, the base station receives the preamble transmitted by the terminal to the base station on the available RO(s). Therefore, it can effectively compensate the terminal having a polarization loss for the polarization loss, and effectively reduce a terminal power consumption and avoid a terminal resource waste for the terminal having no polarization loss, which has a high availability.

Corresponding to the described method examples implementing the application functions, the present invention further provides apparatus examples implementing the application functions.

Referring to FIG. 14, it illustrates a block diagram of a channel transmission apparatus according to an example. The apparatus is applied to a terminal and includes:
a determining module 1401 that is configured to determine, based on indication information transmitted by a base station, a target repetition number corresponding to a polarization adopted by the terminal; and
a first transmitting module 1402 that is configured to transmit, in accordance with the target repetition number, a PRACH on one or more random access resources.

Referring to FIG. 15, it illustrates a block diagram of a channel transmission apparatus according to an example. The apparatus is applied to a base station and includes:
a second transmitting module 1501 that is configured to transmit indication information to a terminal, where the indication information is used by the terminal to determine a target repetition number corresponding to a polarization adopted by the terminal; and
a receiving module 1502 that is configured to receive, on one or more random access resources, a PRACH that is transmitted by the terminal in accordance with the target repetition number.

For the apparatus examples, since they basically correspond to the method examples, reference may be made to the partial descriptions of the method examples for related parts. The apparatus examples described above are merely illustrative, in which the units described as separate components may or may not be physically separated, and the components displayed as the units may or may not be physical units, that is, may be located in one place or distributed to a plurality of units in a network. Some or all of the modules may be selected according to actual needs to achieve the purpose of the implementations of the present invention. It can be understood and implemented by those of ordinary skill in the art without any creative effort.

Accordingly, the present invention also provides a computer-readable storage medium, which stores a computer program. The computer program is configured to perform any one of the described channel transmission methods applicable to the terminal side.

Accordingly, the present invention also provides a computer-readable storage medium, which stores a computer program. The computer program is configured to perform any one of the described channel transmission methods applicable to the base station side.

Accordingly, the present invention also provides a channel transmission apparatus, including:
one or more processors; and
one or more memories for storing instructions executable by the one or more processors.

The one or more processors are configured to perform any one of the described channel transmission methods at the terminal side.

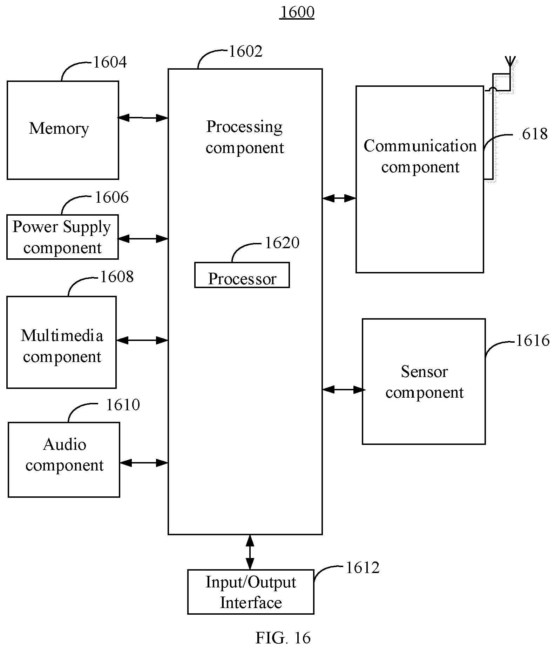

FIG. 16 illustrates a block diagram of a channel transmission apparatus 1600 according to an example. For example, the apparatus 1600 may be a terminal such as a mobile phone, a tablet, an e-book reader, a multimedia player, a wearable device, in-vehicle user equipment, an ipad, a smart TV.

Referring to FIG. 16, the apparatus 1600 may include one or more of the following components: a processing component 1602, a memory 1604, a power supply component 1606, a multimedia component 1608, an audio component 1610, an input/output (I/O) interface 1612, a sensor component 1616, and a communication component 1618.

The processing component 1602 generally controls the overall operations of the apparatus 1600, such as operations associated with display, phone calls, data communications, camera operations, and recording operations. The processing component 1602 may include one or more processors 1620 to execute instructions to complete all or a part of the steps of the described channel transmission methods. In addition, the processing component 1602 may include one or more modules which facilitate the interaction between the processing component 1602 and other components. As an example, the processing component 1602 may include a multimedia module to facilitate the interaction between the multimedia component 1608 and the processing component 1602. As another example, the processing component 1602 may read executable instructions from one or more memories to implement the steps of a channel transmission method provided by each of the described examples.

The memory 1604 is configured to store various types of data to support the operations of the apparatus 1600. Examples of such data include instructions for any application or method operated on the apparatus 1600, contact data, phonebook data, messages, pictures, videos, and the like. The memory 1604 may be implemented by any type of volatile or non-volatile storage device or a combination thereof, such as a static random access memory (SRAM), an electrically erasable programmable read-only memory (EEPROM), an erasable and programmable read-only memory (EPROM), a programmable read-only memory (PROM), a read-only memory (ROM), a magnetic memory, a flash memory, a magnetic disk or an optical disk.

The power supply component 1606 provides power for various components of the apparatus 1600. The power supply component 1606 may include a power management system, one or more power supplies, and other components associated with generating, managing, and distributing power for the apparatus 1600.

The multimedia component 1608 includes a screen providing an output interface between the apparatus 1600 and a user. In some embodiments, the multimedia component 1608 includes a front-facing camera and/or a rear-facing camera. The front camera and/or rear camera may receive external multimedia data when the apparatus 1600 is in an operating mode, such as a photographing mode or a video mode. Each front camera and rear camera may be a fixed optical lens system or have focal length and optical zooming capability.

The audio component 1610 is configured to output and/or input audio signals. For example, the audio component 1610 includes a microphone (MIC) that is configured to receive an external audio signal when the apparatus 1600 is in an operating mode, such as a call mode, a recording mode, and a voice recognition mode. The received audio signal may be further stored in memory 1604 or transmitted via communication component 1618. In some examples, the audio component 1610 also includes a speaker for outputting audio signals.

The I/O interface 1612 provides an interface between the processing component 1602 and a peripheral interface module. The above peripheral interface module may be a keyboard, a click wheel, buttons, or the like. These buttons may include but not limited to a home button, a volume button, a start button and a lock button.

The sensor component 1616 includes one or more sensors to provide the apparatus 1600 with status assessments in various aspects. For example, the sensor component 1616 may detect an open/closed state of the apparatus 1600 and a relative positioning of components such as the display and keypad of the apparatus 1600, and the sensor component 1616 can also detect a change in position of the apparatus 1600 or a component of the apparatus 1600, the presence or absence of user contact with the apparatus 1600, orientation or acceleration/deceleration of the apparatus 1600, and temperature change of the apparatus 1600. The sensor component 1616 may include a proximity sensor configured to detect the presence of a nearby object without any physical contact. The sensor component 1616 may also include a light sensor, such as a complementary metal oxide semiconductor (CMOS) or charge-coupled device (CCD) image sensor, for being applied in imaging applications. In some examples, the sensor component 1616 may also include an acceleration sensor, a gyro sensor, a magnetic sensor, a pressure sensor, or a temperature sensor.

The communication component 1618 is configured to facilitate wired or wireless communication between the apparatus 1600 and other devices. The apparatus 1600 may access a wireless network based on a communication standard, such as Wi-Fi, 2G, 3G, 4G, 5G, 6G, or a combination thereof. In an example, the communication component 1618 receives broadcast signals or broadcast related information from an external broadcast management system via a broadcast channel. In an example, the communication component 1618 also includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth^{®} (BT) technology and other technologies.

In an example, the apparatus 1600 may be implemented by at least one application specific integrated circuit (ASIC), digital signal processor (DSP), digital signal processing device (DSPD), programmable logic device (PLD), field programmable gate array (FPGA), controller, microcontroller, microprocessor, or another electronic component for performing any one of the described channel transmission methods at the terminal side.

In an example, there is also provided a non-transitory computer-readable storage medium including instructions, such as the memory 1004 including instructions. These instructions may be executed by the one or more processors 1020 of the apparatus 1000 to complete the described channel transmission methods. For example, the non-transitory computer-readable storage medium may be ROM, random access memory (RAM), CD-ROM, magnetic tape, floppy disk, optical data storage device, and the like.

Accordingly, the present invention also provides a channel transmission apparatus, including:
one or more processors; and
one or more memories for storing instructions executable by the one or more processors.

The one or more processors are configured to perform any one of the described channel transmission methods at the base station side.

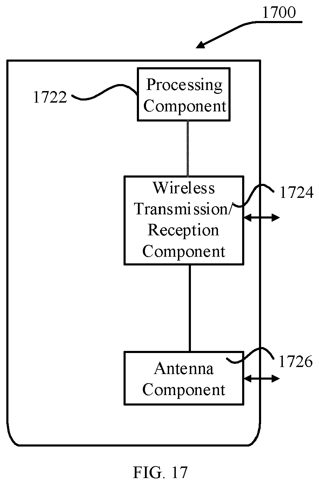

As illustrated in FIG. 17, it illustrates a schematic structural diagram of a channel transmission apparatus 1700 according to an example. The apparatus 1700 may be provided as a base station. Referring to FIG. 17, the apparatus 1700 includes a processing component 1722, a wireless transmission/reception component 1724, an antenna component 1726, and a signal processing part peculiar to a wireless interface. The processing component 1722 may further include at least one processor.

One of the processors in the processing component 1722 may be configured to perform any one of the described channel transmission methods.

The description and the examples are only illustrative, and the scope of the present invention are to be indicated by appended claims.

The scope of the present invention is to be limited only by the appended claims.

## Claims

1. A channel transmission method, wherein the method is performed by a terminal and comprises:
determining (101, 202, 402, 601), based on indication information transmitted by a base station, a target repetition number corresponding to a polarization adopted by the terminal; and
transmitting (102, 203, 403), in accordance with the target repetition number, a physical random access channel, PRACH, on one or more random access resources;
wherein the method further comprises:
receiving (201, 301') the indication information that is broadcast by the base station through system information, SI, wherein the indication information indicates at least one of a downlink polarization or an uplink polarization, and determining (101, 102), based on the indication information transmitted by the base station, the target repetition number corresponding to the polarization adopted by the terminal comprises:
determining (302') a repetition coefficient based on an indicated uplink polarization and the polarization adopted by the terminal; and
taking (303') a product of the repetition coefficient and a preset transmission number of the PRACH as the target repetition number;
or
receiving (401, 501, 501') the indication information that is transmitted by the base station through a physical downlink control channel, PDCCH, wherein the indication information is carried in downlink control information, DCI, carried by the PDCCH, and the indication information indicates a repetition number or a target preamble;
wherein when the indication information indicates the repetition number, determining (101), based on the indication information, the target repetition number corresponding to the polarization adopted by the terminal comprises: determining (502) the target repetition number based on a value indicated in a designated information field of the DCI; and
when the indication information indicates the target preamble, determining (101), based on the indication information, the target repetition number corresponding to the polarization adopted by the terminal comprises: determining (502'), based on preamble types to which different preambles belong, a target preamble type to which the target preamble belongs; and taking (503'), based on a predefined correspondence between the preamble types and repetition numbers, a repetition number corresponding to the target preamble type as the target repetition number.

2. The method according to claim 1,
wherein determining (302') the repetition coefficient based on the indicated uplink polarization and the polarization adopted by the terminal comprises:
determining the repetition coefficient to be 1 in response to determining that the indicated uplink polarization is identical to the polarization adopted by the terminal; and
determining the repetition coefficient to be 2 in response to determining that the indicated uplink polarization is different from the polarization adopted by the terminal.

3. The method according to claim 1, wherein the method further comprises:
determining that an indicated uplink polarization is identical to an indicated downlink polarization in a case that the indication information indicates only the downlink polarization.

4. The method according to claim 1,
wherein when the indication information indicates the repetition number, the designated information field is an information field configured to indicate the repetition number in the DCI, or the designated information field reuses an information field corresponding to a preamble index.

5. The method according to claim 1,
wherein when the indication information indicates the target preamble, the method further comprises: receiving radio resource control, RRC, signaling transmitted by the base station, wherein the RRC signaling indicates the preamble types to which the different preambles belong.

6. The method according to any preceding claim, wherein transmitting (102, 203, 403), in accordance with the target repetition number, the PRACH on the one or more random access resources comprises:
transmitting (602), in accordance with the target repetition number, a preamble for a random access procedure on one or more available random access occasions, ROs, in the one or more random access resources.

7. A channel transmission method, wherein the method is performed by a base station and comprises:
transmitting (801) indication information to a terminal, wherein the indication information is used for the terminal to determine a target repetition number corresponding to a polarization adopted by the terminal; and
receiving (802), on one or more random access resources, a physical random access channel, PRACH, that is transmitted by the terminal in accordance with the target repetition number;
wherein transmitting (801) the indication information to the terminal comprises:
broadcasting (901, 1001') the indication information through system information, SI, wherein the indication information indicates at least one of a downlink polarization or an uplink polarization, and the indication information is used for the terminal to determine a repetition coefficient based on an indicated uplink polarization and the polarization adopted by the terminal and take a product of the repetition coefficient and a preset transmission number of the PRACH as the target repetition number;
or
transmitting (1101) the indication information to the terminal through a physical downlink control channel, PDCCH, wherein the indication information is carried in downlink control information, DCI, carried by the PDCCH, and the indication information indicates a repetition number or a target preamble;
wherein when the indication information indicates the repetition number, the indication information is carried in a designated information field of the DCI, and the indication information is used for the terminal to determine the target repetition number based on a value indicated in the designated information field of the DCI; and
when the indication information indicates the target preamble, the indication information is used for the terminal to: determine, based on preamble types to which different preambles belong, a target preamble type to which the target preamble belongs; and take, based on a predefined correspondence between the preamble types and repetition numbers, a repetition number corresponding to the target preamble type as the target repetition number.

8. The method according to claim 7,
wherein transmitting (1101) the indication information to the terminal through the PDCCH comprises: transmitting (1201) the indication information to the terminal through the PDCCH, wherein the indication information indicates the repetition number, and the designated information field is an information field configured to indicate the repetition number in the DCI, or the designated information field reuses an information field corresponding to a preamble index.

9. The method according to claim 7,
wherein transmitting (1101) the indication information to the terminal through the PDCCH comprises: transmitting (1201') the indication information to the terminal through the PDCCH, wherein the indication information indicates the target preamble, and wherein preferably the method further comprises transmitting radio resource control, RRC, signaling to the terminal, wherein the RRC signaling indicates the preamble types to which the different preambles belong.

10. The method according to claim 7,
wherein transmitting (1101) the indication information to the terminal through the PDCCH comprises: transmitting (1201") the indication information to the terminal through the PDCCH, wherein the indication information indicates that the target repetition number is identical to a repetition number of the PRACH by which the terminal initiates an initial random access procedure.

11. The method according to any one of the preceding claims 7 to 10, wherein receiving (802), on the one or more random access resources, the PRACH that is transmitted by the terminal in accordance with the target repetition number comprises:
receiving (1302), on one or more available random access occasions, ROs, in the one or more random access resources, a preamble for a random access procedure that is transmitted by the terminal in accordance with the target repetition number.

12. A channel transmission apparatus, **characterized in that** the apparatus is configured to perform the channel transmission method according to any one of claims 1 to 6.

13. A channel transmission apparatus, **characterized in that** the apparatus is configured to perform the channel transmission method according to any one of claims 7 to 11.

## Patentansprüche

1. **Kanalübertragungsverfahren**, wobei das Verfahren von einem Endgerät durchgeführt wird und Folgendes umfasst:
Bestimmen (101, 202, 402, 601), basierend auf von einer Basisstation übertragenen Anzeigeinformationen, einer Zielwiederholungszahl, die einer vom Endgerät verwendeten Polarisation entspricht; und
Übertragen (102, 203, 403) eines physikalischen Zufallszugriffskanals (PRACH) auf einer oder mehreren Zufallszugriffsressourcen gemäß der Zielwiederholungszahl;
wobei das Verfahren weiterhin Folgendes umfasst:
Empfangen (201, 301') der Anzeigeinformationen, die von der Basisstation über Systeminformationen (SI) gesendet werden, wobei die Anzeigeinformationen mindestens eine von einer Downlink-Polarisation oder einer Uplink-Polarisation anzeigen, und das Bestimmen (101, 102), basierend auf den von der Basisstation übertragenen Anzeigeinformationen, der Zielwiederholungszahl, die der vom Endgerät verwendeten Polarisation entspricht, Folgendes umfasst:
Bestimmen (302') eines Wiederholungskoeffizienten basierend auf einer angezeigten Uplink-Polarisation und der vom Endgerät verwendeten Polarisation; und
Verwenden (303') eines Produkts aus dem Wiederholungskoeffizienten und einer voreingestellten Übertragungszahl des PRACH als die Zielwiederholungszahl;
oder
Empfangen (401, 501, 501') der Anzeigeinformationen, die von der Basisstation über einen physikalischen Downlink-Steuerkanal (PDCCH) übertragen werden, wobei die Anzeigeinformationen in Downlink-Steuerinformationen (DCI) enthalten sind, die vom PDCCH übertragen werden, und die Anzeigeinformationen eine Wiederholungszahl oder ein Ziel-Präambel anzeigen;
wobei, wenn die Anzeigeinformationen die Wiederholungszahl anzeigen, das Bestimmen (101), basierend auf den Anzeigeinformationen, der Zielwiederholungszahl, die der vom Endgerät verwendeten Polarisation entspricht, Folgendes umfasst: Bestimmen (502) der Zielwiederholungszahl basierend auf einem Wert, der in einem bezeichneten Informationsfeld der DCI angezeigt wird; und
wenn die Anzeigeinformationen das Ziel-Präambel anzeigen, das Bestimmen (101), basierend auf den Anzeigeinformationen, der Zielwiederholungszahl, die der vom Endgerät verwendeten Polarisation entspricht, Folgendes umfasst: Bestimmen (502'), basierend auf Präambel-Typen, zu denen verschiedene Präambeln gehören, eines Ziel-Präambel-Typs, zu dem das Ziel-Präambel gehört; und Verwenden (503'), basierend auf einer vordefinierten Entsprechung zwischen den Präambel-Typen und Wiederholungszahlen, einer Wiederholungszahl, die dem Ziel-Präambel-Typ entspricht, als die Zielwiederholungszahl.

2. Verfahren nach Anspruch 1**,** wobei das Bestimmen (302') des Wiederholungskoeffizienten basierend auf der angezeigten Uplink-Polarisation und der vom Endgerät verwendeten Polarisation Folgendes umfasst:
Festlegen des Wiederholungskoeffizienten auf 1, wenn festgestellt wird, dass die angezeigte Uplink-Polarisation mit der vom Endgerät verwendeten Polarisation identisch ist; und
Festlegen des Wiederholungskoeffizienten auf 2, wenn festgestellt wird, dass die angezeigte Uplink-Polarisation von der vom Endgerät verwendeten Polarisation unterschiedlich ist.

3. Verfahren nach Anspruch 1, wobei das Verfahren ferner Folgendes umfasst:
Feststellen, dass eine angezeigte Uplink-Polarisation mit einer angezeigten Downlink-Polarisation identisch ist, falls die Anzeigeinformationen nur die Downlink-Polarisation anzeigen.

4. Verfahren nach Anspruch 1, wobei, wenn die Anzeigeinformationen die Wiederholungszahl anzeigen, das bezeichnete Informationsfeld ein Informationsfeld ist, das zur Anzeige der Wiederholungszahl in der DCI konfiguriert ist, oder das bezeichnete Informationsfeld ein Informationsfeld wiederverwendet, das einem Präambel-Index entspricht.

5. Verfahren nach Anspruch 1, wobei, wenn die Anzeigeinformationen das Ziel-Präambel anzeigen, das Verfahren weiterhin Folgendes umfasst: Empfangen von Funkressourcensteuerungs-(RRC-)Signalisierung, die von der Basisstation übertragen wird, wobei die RRC-Signalisierung die Präambel-Typen angibt, zu denen die verschiedenen Präambeln gehören.

6. Verfahren nach einem der vorhergehenden Ansprüche**,** wobei das Übertragen (102, 203, 403) des PRACH auf der einen oder den mehreren Zufallszugriffsressourcen gemäß der Zielwiederholungszahl Folgendes umfasst:
Übertragen (602) einer Präambel für ein Zufallszugriffsverfahren auf einer oder mehreren verfügbaren Zufallszugriffsgelegenheiten (ROs) in der einen oder den mehreren Zufallszugriffsressourcen gemäß der Zielwiederholungszahl.

7. Kanalübertragungsverfahren, wobei das Verfahren von einer Basisstation durchgeführt wird und Folgendes umfasst:
Übertragen (801) von Anzeigeinformationen an ein Endgerät, wobei die Anzeigeinformationen vom Endgerät verwendet werden, um eine Zielwiederholungszahl zu bestimmen, die einer vom Endgerät verwendeten Polarisation entspricht; und
Empfangen (802) eines physikalischen Zufallszugriffskanals (PRACH), der vom Endgerät gemäß der Zielwiederholungszahl auf einer oder mehreren Zufallszugriffsressourcen übertragen wird;
wobei das Übertragen (801) der Anzeigeinformationen an das Endgerät Folgendes umfasst:
Senden (901, 1001') der Anzeigeinformationen über Systeminformationen (SI), wobei die Anzeigeinformationen mindestens eine von einer Downlink-Polarisation oder einer Uplink-Polarisation anzeigen, und die Anzeigeinformationen vom Endgerät verwendet werden, um einen Wiederholungskoeffizienten basierend auf einer angezeigten Uplink-Polarisation und der vom Endgerät verwendeten Polarisation zu bestimmen und ein Produkt aus dem Wiederholungskoeffizienten und einer voreingestellten Übertragungszahl des PRACH als die Zielwiederholungszahl zu verwenden;
oder
Übertragen (1101) der Anzeigeinformationen an das Endgerät über einen physikalischen Downlink-Steuerkanal (PDCCH), wobei die Anzeigeinformationen in Downlink-Steuerinformationen (DCI) enthalten sind, die vom PDCCH übertragen werden, und die Anzeigeinformationen eine Wiederholungszahl oder ein Ziel-Präambel anzeigen;
wobei, wenn die Anzeigeinformationen die Wiederholungszahl anzeigen, die Anzeigeinformationen in einem bezeichneten Informationsfeld der DCI enthalten sind, und die Anzeigeinformationen vom Endgerät verwendet werden, um die Zielwiederholungszahl basierend auf einem Wert zu bestimmen, der in dem bezeichneten Informationsfeld der DCI angezeigt wird; und
wenn die Anzeigeinformationen das Ziel-Präambel anzeigen, die Anzeigeinformationen vom Endgerät verwendet werden, um:
basierend auf Präambel-Typen, zu denen verschiedene Präambeln gehören, einen Ziel-Präambel-Typ zu bestimmen, zu dem das Ziel-Präambel gehört; und
basierend auf einer vordefinierten Entsprechung zwischen den Präambel-Typen und Wiederholungszahlen eine Wiederholungszahl zu verwenden, die dem Ziel-Präambel-Typ entspricht, als die Zielwiederholungszahl.

8. Verfahren nach Anspruch 7, wobei das Übertragen (1101) der Anzeigeinformationen an das Endgerät über den PDCCH Folgendes umfasst:
Übertragen (1201) der Anzeigeinformationen an das Endgerät über den PDCCH, wobei die Anzeigeinformationen die Wiederholungszahl anzeigen und das bezeichnete Informationsfeld ein Informationsfeld ist, das zur Anzeige der Wiederholungszahl in der DCI konfiguriert ist, oder das bezeichnete Informationsfeld ein Informationsfeld wiederverwendet, das einem Präambel-Index entspricht.

9. Verfahren nach Anspruch 7, wobei das Übertragen (1101) der Anzeigeinformationen an das Endgerät über den PDCCH Folgendes umfasst:
Übertragen (1201') der Anzeigeinformationen an das Endgerät über den PDCCH, wobei die Anzeigeinformationen die Ziel-Präambel anzeigen, und wobei das Verfahren vorzugsweise weiterhin das Übertragen von Funkressourcensteuerungs-(RRC-)Signalisierung an das Endgerät umfasst, wobei die RRC-Signalisierung die Präambel-Typen angibt, zu denen die verschiedenen Präambeln gehören.

10. Verfahren nach Anspruch 7, wobei das Übertragen (1101) der Anzeigeinformationen an das Endgerät über den PDCCH Folgendes umfasst:
Übertragen (1201'') der Anzeigeinformationen an das Endgerät über den PDCCH, wobei die Anzeigeinformationen anzeigen, dass die Zielwiederholungszahl mit einer Wiederholungszahl des PRACH identisch ist, mit dem das Endgerät ein erstes Zufallszugriffsverfahren initiiert.

11. Verfahren nach einem der vorhergehenden Ansprüche 7 bis 10, wobei das Empfangen (802) des PRACH, der vom Endgerät gemäß der Zielwiederholungszahl auf der einen oder den mehreren Zufallszugriffsressourcen übertragen wird, Folgendes umfasst:
Empfangen (1302) einer Präambel für ein Zufallszugriffsverfahren, die vom Endgerät gemäß der Zielwiederholungszahl auf einer oder mehreren verfügbaren Zufallszugriffsgelegenheiten (ROs) in der einen oder den mehreren Zufallszugriffsressourcen übertragen wird.

12. Kanalübertragungsvorrichtung**, dadurch gekennzeichnet, dass** die Vorrichtung konfiguriert ist, um das Kanalübertragungsverfahren nach einem der Ansprüche 1 bis 6 durchzuführen.

13. Kanalübertragungsvorrichtung**, dadurch gekennzeichnet, dass** die Vorrichtung konfiguriert ist, um das Kanalübertragungsverfahren nach einem der Ansprüche 7 bis 11 durchzuführen.

## Revendications

1. Procédé de transmission de canal, le procédé étant exécuté par un terminal et comprenant :
la détermination (101, 202, 402, 601), sur la base d'informations d'indication transmises par une station de base, d'un nombre de répétitions cible correspondant à une polarisation adoptée par le terminal ; et
la transmission (102, 203, 403), conformément au nombre de répétitions cible, d'un canal d'accès aléatoire physique (PRACH) sur une ou plusieurs ressources d'accès aléatoire ;
le procédé comprenant en outre :
la réception (201, 301') des informations d'indication qui sont diffusées par la station de base via des informations système (SI), les informations d'indication indiquant au moins l'une parmi une polarisation de liaison descendante ou une polarisation de liaison montante, et la détermination (101, 102), sur la base des informations d'indication transmises par la station de base, du nombre de répétitions cible correspondant à la polarisation adoptée par le terminal comprend :
la détermination (302') d'un coefficient de répétition sur la base d'une polarisation de liaison montante indiquée et de la polarisation adoptée par le terminal ; et
la prise (303') du produit du coefficient de répétition et d'un nombre de transmission prédéfinis du PRACH comme le nombre de répétitions cible ;
ou
la réception (401, 501, 501') des informations d'indication qui sont transmises par la station de base via un canal de contrôle de liaison descendante physique (PDCCH), les informations d'indication étant portées dans des informations de contrôle de liaison descendante (DCI) portées par le PDCCH, et les informations d'indication indiquant un nombre de répétitions ou un préambule cible ;
dans lequel, lorsque les informations d'indication indiquent le nombre de répétitions, la détermination (101), sur la base des informations d'indication, du nombre de répétitions cible correspondant à la polarisation adoptée par le terminal comprend : la détermination (502) du nombre de répétitions cible sur la base d'une valeur indiquée dans un champ d'information désigné des DCI ; et
lorsque les informations d'indication indiquent le préambule cible, la détermination (101), sur la base des informations d'indication, du nombre de répétitions cible correspondant à la polarisation adoptée par le terminal comprend : la détermination (502'), sur la base des types de préambule auxquels appartiennent différents préambules, d'un type de préambule cible auquel appartient le préambule cible ; et la prise (503'), sur la base d'une correspondance prédéfinie entre les types de préambule et les nombres de répétitions, d'un nombre de répétitions correspondant au type de préambule cible comme le nombre de répétitions cible.

2. Procédé selon la revendication 1, dans lequel la détermination (302') du coefficient de répétition sur la base de la polarisation de liaison montante indiquée et de la polarisation adoptée par le terminal comprend :
la détermination du coefficient de répétition à 1 en réponse à la détermination que la polarisation de liaison montante indiquée est identique à la polarisation adoptée par le terminal ; et
la détermination du coefficient de répétition à 2 en réponse à la détermination que la polarisation de liaison montante indiquée est différente de la polarisation adoptée par le terminal.

3. Procédé selon la revendication 1, le procédé comprenant en outre :
la détermination qu'une polarisation de liaison montante indiquée est identique à une polarisation de liaison descendante indiquée dans un cas où les informations d'indication n'indiquent que la polarisation de liaison descendante.

4. Procédé selon la revendication 1, dans lequel, lorsque les informations d'indication indiquent le nombre de répétitions, le champ d'information désigné est un champ d'information configuré pour indiquer le nombre de répétitions dans les DCI, ou le champ d'information désigné réutilise un champ d'information correspondant à un index de préambule.

5. Procédé selon la revendication 1, dans lequel, lorsque les informations d'indication indiquent le préambule cible, le procédé comprend en outre : la réception d'une signalisation de contrôle des ressources radio (RRC) transmise par la station de base, la signalisation RRC indiquant les types de préambule auxquels appartiennent les différents préambules.

6. Procédé selon l'une quelconque des revendications précédentes, dans lequel la transmission (102, 203, 403) du PRACH sur les une ou plusieurs ressources d'accès aléatoire conformément au nombre de répétitions cible comprend :
la transmission (602), conformément au nombre de répétitions cible, d'un préambule pour une procédure d'accès aléatoire sur une ou plusieurs occasions d'accès aléatoire disponibles (RO) dans les une ou plusieurs ressources d'accès aléatoire.

7. Procédé de transmission de canal, le procédé étant exécuté par une station de base et comprenant :
la transmission (801) d'informations d'indication à un terminal, les informations d'indication étant utilisées par le terminal pour déterminer un nombre de répétitions cible correspondant à une polarisation adoptée par le terminal ; et
la réception (802), sur une ou plusieurs ressources d'accès aléatoire, d'un canal d'accès aléatoire physique (PRACH) qui est transmis par le terminal conformément au nombre de répétitions cible ;
la transmission (801) des informations d'indication au terminal comprenant :
la diffusion (901, 1001') des informations d'indication via des informations système (SI), les informations d'indication indiquant au moins l'une parmi une polarisation de liaison descendante ou une polarisation de liaison montante, et les informations d'indication étant utilisées par le terminal pour déterminer un coefficient de répétition sur la base d'une polarisation de liaison montante indiquée et de la polarisation adoptée par le terminal et prendre le produit du coefficient de répétition et d'un nombre de transmission prédéfinis du PRACH comme le nombre de répétitions cible ;
ou
la transmission (1101) des informations d'indication au terminal via un canal de contrôle de liaison descendante physique (PDCCH), les informations d'indication étant portées dans des informations de contrôle de liaison descendante (DCI) portées par le PDCCH, et les informations d'indication indiquant un nombre de répétitions ou un préambule cible ;
dans lequel, lorsque les informations d'indication indiquent le nombre de répétitions, les informations d'indication sont portées dans un champ d'information désigné des DCI, et les informations d'indication sont utilisées par le terminal pour déterminer le nombre de répétitions cible sur la base d'une valeur indiquée dans le champ d'information désigné des DCI ; et
lorsque les informations d'indication indiquent le préambule cible, les informations d'indication sont utilisées par le terminal pour :
déterminer, sur la base des types de préambule auxquels appartiennent différents préambules, un type de préambule cible auquel appartient le préambule cible ; et
prendre, sur la base d'une correspondance prédéfinie entre les types de préambule et les nombres de répétitions, un nombre de répétitions correspondant au type de préambule cible comme le nombre de répétitions cible.

8. Procédé selon la revendication 7, dans lequel la transmission (1101) des informations d'indication au terminal via le PDCCH comprend :
la transmission (1201) des informations d'indication au terminal via le PDCCH, les informations d'indication indiquant le nombre de répétitions, et le champ d'information désigné étant un champ d'information configuré pour indiquer le nombre de répétitions dans les DCI, ou le champ d'information désigné réutilisant un champ d'information correspondant à un index de préambule.

9. Procédé selon la revendication 7, dans lequel la transmission (1101) des informations d'indication au terminal via le PDCCH comprend :
la transmission (1201') des informations d'indication au terminal via le PDCCH, les informations d'indication indiquant le préambule cible, et dans lequel, de préférence, le procédé comprend en outre la transmission d'une signalisation de contrôle des ressources radio (RRC) au terminal, la signalisation RRC indiquant les types de préambule auxquels appartiennent les différents préambules.

10. Procédé selon la revendication 7, dans lequel la transmission (1101) des informations d'indication au terminal via le PDCCH comprend :
la transmission (1201'') des informations d'indication au terminal via le PDCCH, les informations d'indication indiquant que le nombre de répétitions cible est identique à un nombre de répétitions du PRACH par lequel le terminal initie une procédure d'accès aléatoire initiale.

11. Procédé selon l'une quelconque des revendications précédentes 7 à 10, dans lequel la réception (802), sur les une ou plusieurs ressources d'accès aléatoire, du PRACH transmis par le terminal conformément au nombre de répétitions cible comprend :
la réception (1302), sur une ou plusieurs occasions d'accès aléatoire disponibles (RO) dans les une ou plusieurs ressources d'accès aléatoire, d'un préambule pour une procédure d'accès aléatoire transmis par le terminal conformément au nombre de répétitions cible.

12. Appareil de transmission de canal, **caractérisé en ce que** l'appareil est configuré pour exécuter le procédé de transmission de canal selon l'une quelconque des revendications 1 à 6.

13. Appareil de transmission de canal, **caractérisé en ce que** l'appareil est configuré pour exécuter le procédé de transmission de canal selon l'une quelconque des revendications 7 à 11.
